# EUROPEAN PATENT APPLICATION

(11) **EP 2 461 283 A1**
(43) Date of publication of application: **06.06.2012**
(21) Application number: 11187779.1
(22) Date of filing: 04.11.2011
(51) Int. Cl.: G06Q 10/06

(54) **Calendar event creation using electronic message conversations**

(30) Priority: 06.12.2010 US 960667
(71) Applicant: Sony Ericsson Mobile Communications AB, 221 88 Lund (SE)
(72) Inventor: Jonsson, Håkan, SE-245 65 Hjärup (SE)
(74) Representative: VALEA AB

(57) **Abstract**

A device receives multiple electronic messages. The device identifies a conversation from the multiple electronic messages, and extracts one or more items of data related to the occurrence of an event from the identified conversation. The device further presents the one or more items of data to a user of the device or stores the one or more items of data as a calendar event in association with a calendar application.

## Description

### BACKGROUND

Electronic devices, such as, for example, computers and cellular telephones, may utilize calendar applications that permit the users of the devices to manually schedule events in electronic calendars that assist those users in keeping track of events in their lives that they need to remember. Such calendar applications are useful in providing reminders to the users of upcoming events such as weddings, family holidays, family get-togethers, or other types of events.

### SUMMARY

In one exemplary embodiment, a method may include storing a conversation included in multiple electronic messages sent between a first device and a second device, and extracting, at the first device, items of data from the conversation related to a calendar event. The method may further include scheduling the calendar event and storing the items of data in association with a calendar application at the first device.

Additionally, the electronic messages may include Short Message Service (SMS) text messages, Multimedia Messaging Service (MMS) messages, e-mails, or Instant Messages (IMs).

Additionally, the items of data may include at least one of a name, a date, a time or a place.

Additionally, the items of data include a name, a date, a time and a place.

Additionally, extracting the items of data from the conversation may include using an extraction algorithm to extract the items of data.

Additionally, the first device may include one of a computer, a cellular telephone, a satellite navigation device, a smart phone, a personal digital assistant (PDA), a media player device, or a digital camera.

Additionally, the method may further include identifying the conversation from the multiple electronic messages.

Additionally, identifying the conversation from the multiple electronic messages may include identifying ones of the multiple electronic messages that belong to a set of a last number of the multiple electronic messages, identifying the conversation from the multiple electronic messages may include identifying ones of the multiple electronic messages that belong to a set of the electronic messages transmitted within a specific period of time or identifying the conversation from the multiple electronic messages may include identifying ones of the multiple electronic messages that belong to a set of the multiple electronic messages classified as belonging to a same conversation as classified by a machine learning classifier trained to classify based on human-classification examples.

Additionally, the machine learning classifier may use natural language processing.

In another exemplary embodiment, a device may include a communication interface configured to receive a plurality of electronic messages. The device may further include a processing unit configured to: identify a conversation from the plurality of electronic messages, extract one or more items of data related to the occurrence of an event from the identified conversation, and present the one or more items of data to a user of the device or store the one or more items of data as a calendar event in association with a calendar application.

Additionally, the one or more items of data may include one or more names, dates, times or locations.

Additionally, the one or more items of data may include multiple names, multiple dates, multiple times, or multiple locations.

Additionally, the processing unit may be further configured to receive a selection of one of the multiple names, multiple dates, multiple times or multiple locations.

Additionally, the device may include a computer, a cellular telephone, a satellite navigation device, a smart phone, a personal digital assistant (PDA), a media player device, or a digital camera, the plurality of electronic messages may include Short Message Service (SMS) text messages, Multimedia Messaging Service (MMS) messages, e-mails, or Instant Messages (IMs).

Additionally, when identifying a conversation from the plurality of electronic messages, the processing unit may be further configured to: identify ones of the plurality of electronic messages that belong to a set of a last number of the plurality of electronic messages, identify ones of the plurality of electronic messages that belong to a set of the electronic messages transmitted within a specific period of time, or identify ones of the plurality of electronic messages that belong to a set of the plurality of electronic messages classified as belonging to a same conversation as classified by a machine learning classifier trained to classify based on human-classification examples.

In yet another exemplary embodiment, a computer-readable medium containing instructions executable by at least one processing unit may include one or more instructions for receiving a plurality of electronic messages, wherein the plurality of electronic messages comprise Short Message Service (SMS) text messages, Multimedia Messaging Service (MMS) messages, e-mails, or Instant Messages (IMs). The computer-readable medium may further include one or more instructions for identifying a conversation from the plurality of electronic messages, and one or more instructions for extracting one or more items of data related to the occurrence of an event from the identified conversation, wherein the one or more items of data comprise one or more names, dates, times or locations. The computer-readable medium may also include one or more instructions for presenting the one or more items of data to a user of the device or store the one or more items of data as a calendar event in association with a calendar application.

Additionally, the one or more instructions for identifying the conversation from the plurality of electronic messages may include one or more instructions for identifying ones of the plurality of electronic messages that belong to a set of a last number of the plurality of electronic messages, one or more instructions for identifying ones of the plurality of electronic messages that belong to a set of the electronic messages transmitted within a specific period of time, or one or more instructions for identifying ones of the plurality of electronic messages that belong to a set of the plurality of electronic messages classified as belonging to a same conversation as classified by a machine learning classifier trained to classify based on human-classification examples.

### BRIEF DESCRIPTION OF THE DRAWINGS

The accompanying drawings, which are incorporated in and constitute a part of this specification, illustrate one or more embodiments described herein and, together with the description, explain these embodiments. In the drawings:
FIG. 1 illustrates an overview of the extraction of data related to the occurrence of an event from a conversation involving electronic messages between two device users that can be stored by one of the device users as a calendar event;
FIG. 2 is a diagram that depicts an exemplary environment in which two devices may exchange electronic messages;
FIG. 3 is a diagram that depicts examples of the message relay element of the network of FIG. 2;
FIG. 4 is a diagram that depicts exemplary components of one of the devices of FIG. 2;
FIG. 5 is a diagram that depicts an exemplary implementation of the device of FIG. 4 where the input device and the output device are implemented, in part, by a touch screen display;
FIG. 6 is a diagram that depicts exemplary functional components of the device of FIG. 4;
FIGS. 7A, 7B and 7C are flow diagrams illustrating an exemplary process for storing sent and received messages at a device and for extracting named entities, such as, names, dates, times and locations, from the messages for scheduling and storing calendar events at the device; and FIGS. 8-14 are diagrams depicting exemplary touch screen displays associated with the process of FIGS. 7A - 7C.

### DETAILED DESCRIPTION

The following detailed description refers to the accompanying drawings. The same reference numbers in different drawings may identify the same or similar elements. Also, the following detailed description does not limit the invention.

### OVERVIEW

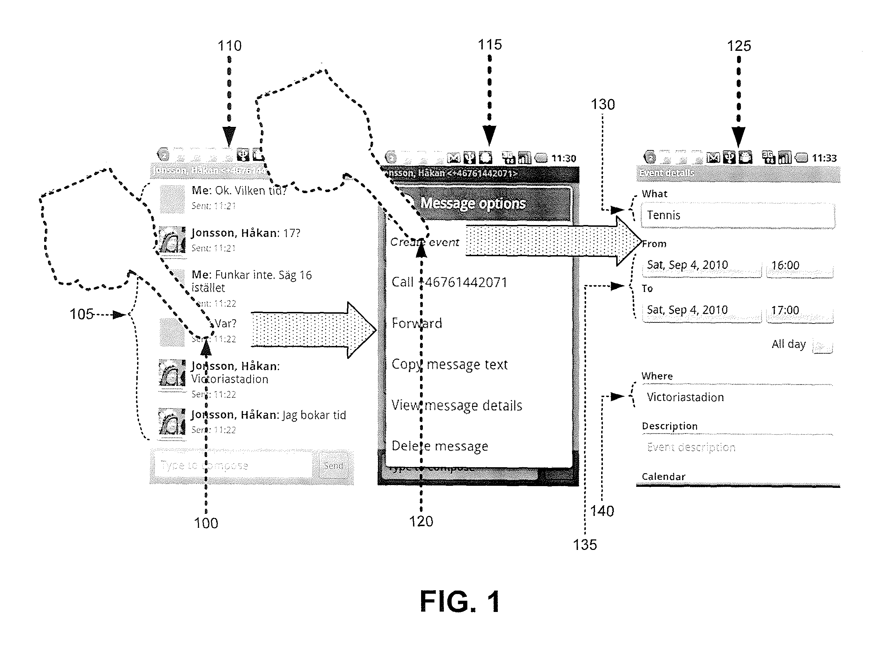

FIG. 1 illustrates an overview of the extraction of data related to the occurrence of an event from a conversation involving electronic messages between two device users that can be stored by one of the device users as a calendar event in association with a calendar application. Multiple electronic messages may be sent from and received at one of the two devices involved in a conversation and may be stored at the one of the two devices. In one exemplary implementation, for example, the one of the two devices may include a cellular telephone (e.g., a smart phone). The electronic messages sent between the two devices may include text messages (e.g., Short Message Service (SMS) text messages), multi-media messages (e.g., Multi-media Messaging Service (MMS) messages), e-mails, Instant Messages (IMs), or other types of messages.

A user of the one of the two devices may select a conversation from multiple stored sent/received electronic messages by selecting one of the messages included within the conversation. For example, as shown in FIG. 1, the user may apply a touch 100 to a single message of a series 105 of messages of a conversation on a touch screen of the device that displays a window 110 of electronic messages. In the example of FIG. 1, series 105 of messages includes SMS text messages, and touch 100 may be applied to a single SMS text message in series 105.

Upon selection of a message included in a conversation between the two devices, a message option window 115 may be provided to the user via the touch screen display. The user may apply a touch 120 to a "create event" option from message option window 115. Upon application of touch 120 to the "create event" option from window 115, the device may identify the conversation of which the single selected messages is a part, and may analyze the messages of the identified conversation to extract specific named entities, such as, for example, names, times, dates and locations. Identification of the conversation may include identifying a series of sent and received messages, of which the single selected message is a part, that meet one of the following criteria: 1) identify the sent or received messages between two devices that belong to a set of the last X number of messages (where X is a positive integer); 2) identify the sent or received messages between two devices that belong to a set of messages transmitted within a specific time T; or 3) identify the sent or received messages between two devices that belong to a set of messages classified as belonging to a same conversation as classified by a machine learning classifier (e.g., using natural language processing) trained to classify based on provided human-classification examples. A machine learning classifier may implement different types of algorithms that may automatically learn to recognize patterns and make intelligent decisions based on data. Different types of algorithms used in a machine learning classifier include inductive logic programming, Bayes, Support Vector Machine, logistic regression, hidden Markov model, clustering or reinforcement learning. Other types of algorithms may, however, be used.

Subsequent to identifying the conversation, the device may implement an extraction engine for extracting named entities, such as, for example, names, times, dates and locations, from the messages of the identified conversation. The extraction engine may analyze sent or received messages of the identified conversation to extract the named entities associated with the occurrence of an event from the text of the messages. The extraction engine may use various different algorithms for extracting named entities. In one exemplary implementation, the extraction engine may use a linear support vector machine trained to correctly classify each word in a message based on the presence or absence of one or more different types of features in the message. Support vector machines implement algorithms, used for classification, that analyze data and recognize patterns.

FIG. 1 further depicts an event detail window 125 that displays named entities extracted from a conversation that includes series of messages 105. The named entities may include a name of the event (i.e., "what) 130, a date and time 135 of the event, and a location (i.e., "where") 140 of the event. In the specific example shown in window 125 of FIG. 1, the event is tennis practice held on Saturday, September 4, 2010 between 4:00 pm (16:00) and 5:00 pm (17:00) at Victoriastadion. The named entities displayed in event detail window 125 may be scheduled and stored in a calendar application implemented at the device.

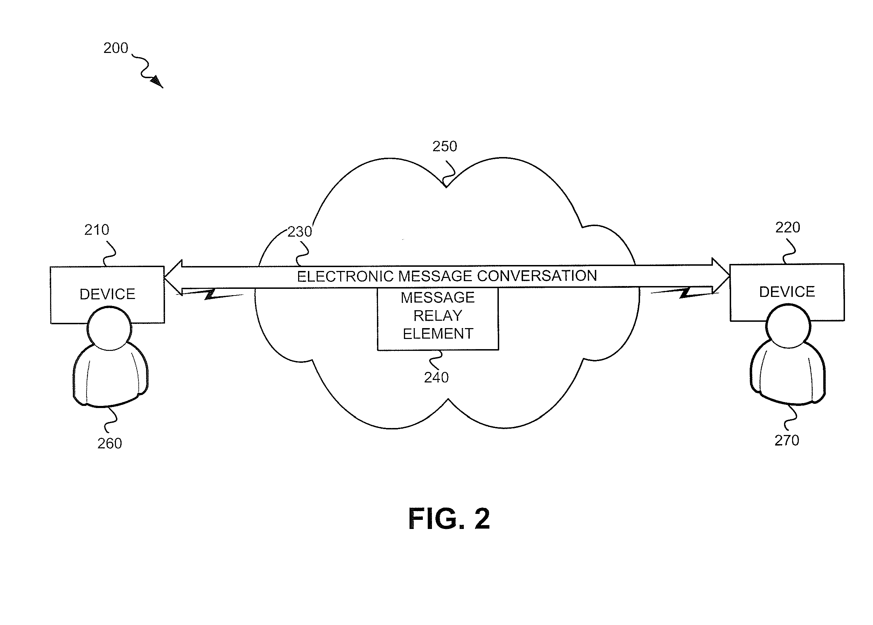

FIG. 2 is a diagram that depicts an exemplary environment 200 in which two devices may exchange electronic messages according to embodiments described herein. Environment 200 may include a device 210, a device 220, a message relay element 240, and a network 250. As shown in FIG. 2, a user 260 at device 210 may engage in an electronic message conversation 230, via a message relay element 240 of network 250, with another user 270 at device 220.

Device 210 and 220 may each include any type of electronic device that may send and receive electronic messages. For example, device 210 and 220 may each include a computer (e.g., a desktop, laptop, palmtop, or tablet computer), a cellular telephone; a satellite navigation device; a smart phone; a personal digital assistant (PDA); a media player device; a digital camera; or another device that may be used to communicate and may use touch input. In some exemplary embodiments, devices 210 and 220 may each include a mobile device.

Electronic message conversation 230 may include a series of electronic messages that either: belong to a set of the last X number of messages (where X is a positive integer) exchanged between two devices; 2) belong to a set of messages transmitted within a specific time T between two devices; or 3) belong to a set of messages transmitted between two devices and classified as belonging to a same conversation as classified by a machine learning classifier (e.g., using natural language processing) trained to classify based on provided human-classification examples.

Message relay element 240 may include any type of network element that may serve as a relay for routing messages between a sending device and a receiving device. For example, message relay element 240 may relay messages between device 210 and device 220. The messages may include, for example, text messages (e.g., SMS text messages, multi-media messages (MMS messages), e-mails, Instant Messages (IMs), etc.).

Network 250 may include may include one or more networks of any type, such as, for example, a telecommunications network (e.g., a Public Switched Telephone Network (PSTN)), a local area network (LAN), a wide area network (WAN), a metropolitan area network (MAN), an intranet, the Internet, a wireless satellite network, a cable network (e.g., an optical cable network), and/or one or more wireless public land mobile networks (PLMNs). The PLMN(s) may include a Code Division Multiple Access (CDMA) 2000 PLMN, a Global System for Mobile Communications (GSM) PLMN, a Long Term Evolution (LTE) PLMN and/or other types of PLMNs not specifically described herein.

The configuration of environment 200 depicted in FIG. 2 is for illustrative purposes only. It should be understood that other configurations may be implemented. Therefore, environment 200 may include additional, fewer and/or different components than those depicted in FIG. 2. For example, though only two devices 210 and 220 are shown in FIG. 1, multiple devices may connect with network 250, with each device possibly having a different user.

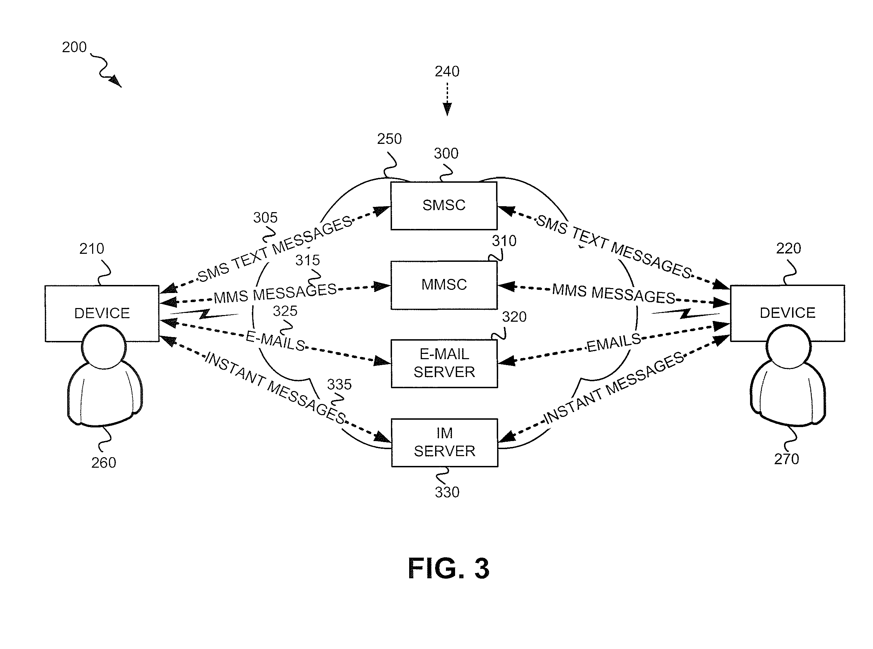

FIG. 3 is a diagram that depicts examples of message relay element 240 of network 250. As shown in FIG. 3, message relay element 240 may include, among other types of message relay elements, a SMS Center (SMSC) 300, a MMS Center (MMSC) 310, an e-mail server 320, and an IM server 330. As further shown in FIG. 3, SMSC 300 may relay SMS text messages 305 between devices 210 and 220; MMSC 310 may relay MMS messages 315 between devices 210 and 220; e-mail server 320 may relay e-mails 325 between devices 210 and 220; and IM server 330 may relay instant messages 335 between devices 210 and 220.

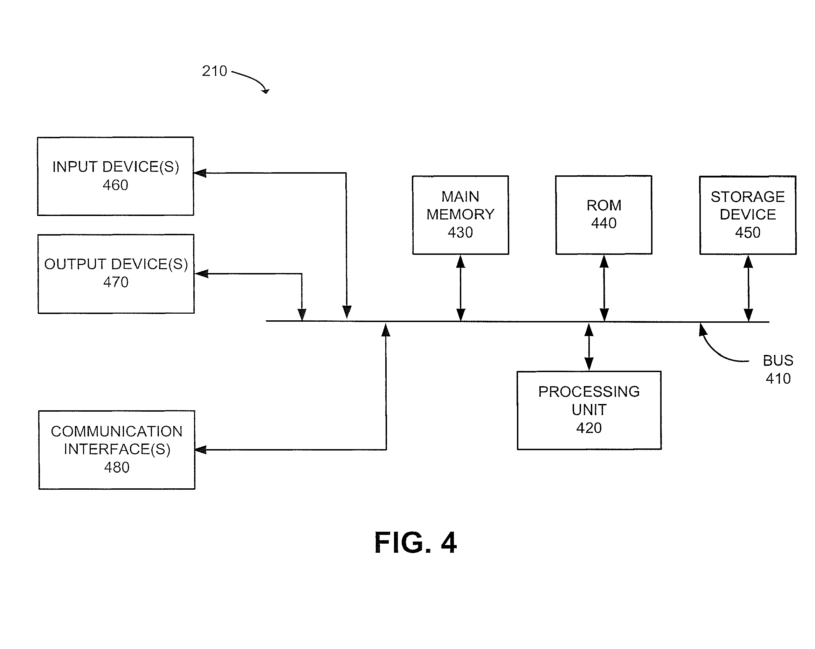

FIG. 4 is a diagram that depicts exemplary components of device 210. Device 220 may be configured similarly. Device 210 may include a bus 410, a processing unit 420, a main memory 430, a read only memory (ROM) 440, a storage device 450, an input device(s) 460, an output device(s) 470, and a communication interface 480. Bus 410 may include a path that permits communication among the elements of device 210.

Processing unit 420 may include one or more processors, microprocessors, or processing logic that may interpret and execute instructions. Main memory 430 may include a random access memory (RAM) or another type of dynamic storage device that may store information and instructions for execution by processing unit 420. ROM 440 may include a ROM device or another type of static storage device that may store static information and instructions for use by processing unit 420. Storage device 450 may include a magnetic and/or optical recording medium and its corresponding drive. Storage device 450 may further include a flash drive.

Input device(s) 460 may permit a user to input information to device 210, such as, for example, a keypad or a keyboard, voice recognition and/or biometric mechanisms, etc. Additionally, input device(s) 460 may include a touch screen display having a touch panel that permits touch input by the user. Output device(s) 470 may output information to the user, such as, for example, a display, a speaker, etc. Additionally, output device(s) 470 may include a touch screen display where the display outputs information to the user. Communication interface 480 may enable device 210 to communicate with other devices and/or systems. Communication interface 480 may communicate with another device or system via a network, such as network 250. For example, communication interface 480 may include a radio transceiver for communicating with network 250 via wireless radio channels.

Device 210 may perform certain operations or processes, as described in detail below. Device 210 may perform these operations in response to processing unit 420 executing software instructions contained in a computer-readable medium, such as memory 430. A computer-readable medium may be defined as a physical or logical memory device. A logical memory device may include memory space within a single physical memory device or spread across multiple physical memory devices.

The software instructions may be read into main memory 430 from another computer-readable medium, such as storage device 450, or from another device via communication interface 480. The software instructions contained in main memory 430 may cause processing unit 420 to perform operations or processes that are described below. Alternatively, hardwired circuitry may be used in place of or in combination with software instructions to implement processes consistent with different embodiments of device 210. Thus, exemplary implementations are not limited to any specific combination of hardware circuitry and software.

The configuration of components of device 210 illustrated in FIG. 4 is for illustrative purposes only. It should be understood that other configurations may be implemented. Therefore, device 210 may include additional, fewer and/or different components than those depicted in FIG. 4.

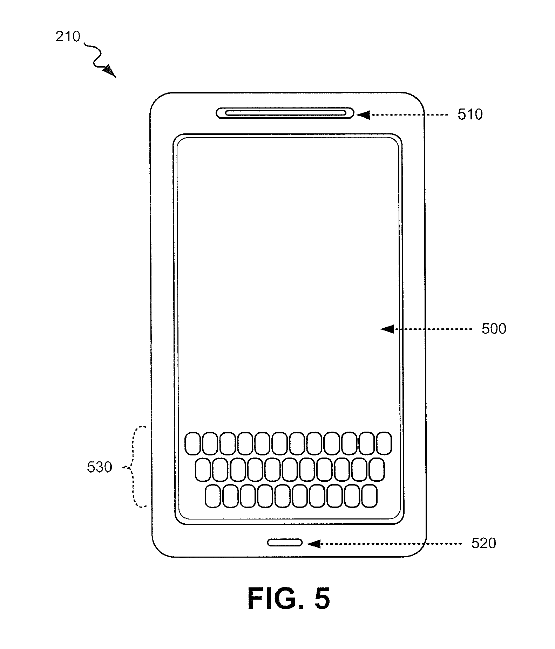

FIG. 5 is a diagram that depicts an exemplary implementation of device 210 where input device(s) 460 and output device(s) 470 are implemented, in part, by a touch screen display 500. Touch screen display 500 may include a touch panel, disposed on a front of device 210, which may permit control of the device via touch input by the user. The touch panel may be integrated with, and/or overlaid on, a display of touch screen display 500 to form a touch screen or a panel-enabled display that may function as a user input interface. For example, in one implementation, the touch panel may include a near field-sensitive (e.g., capacitive), acoustically-sensitive (e.g., surface acoustic wave), photo-sensitive (e.g., infrared), resistive and/or any other type of touch panel that allows a display to be used as an input device. In another implementation, the touch panel may include multiple touch-sensitive technologies. Generally, the touch panel may include any kind of technology that provides the ability to identify the occurrence of a touch upon touch screen display 500.

The display component of touch screen display 500 may include a device that can display signals generated by device 210 as text or images on a screen (e.g., a liquid crystal display (LCD), cathode ray tube (CRT) display, organic light-emitting diode (OLED) display, surface-conduction electro-emitter display (SED), plasma display, field emission display (FED), bistable display, etc.). In certain implementations, the display may provide a high-resolution, active-matrix presentation suitable for the wide variety of applications and features associated with typical devices. The display may provide visual information to the user and serve—in conjunction with the touch panel—as a user interface to detect user input.

In the exemplary implementation depicted in FIG. 5, output device(s) 470 may further include a speaker 510 that outputs audio information (e.g., speech) and input device(s) 460 may further include a microphone 520 for inputting audio information (e.g., speech). Touch screen display 500 may display a virtual keyboard 530 that, in conjunction with the touch panel component of display 500, may be used to enter text (e.g., text messages) into device 210.

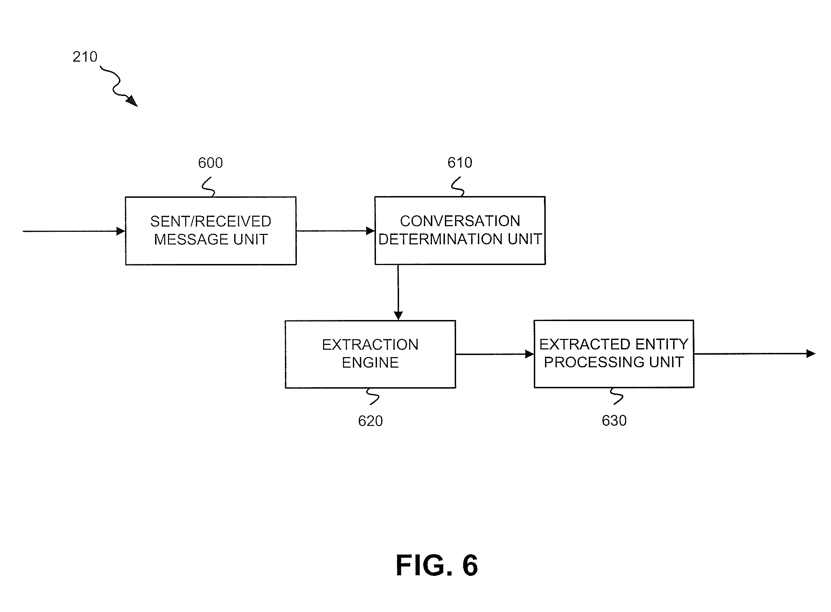

FIG. 6 is a diagram that depicts exemplary functional components of device 210. The functional components of FIG. 6 may be implemented by processing unit 420, possibly in conjunction with other components of device 210 depicted in FIG. 4. As shown in FIG. 6, the functional components of device 210 may include a sent/received message unit 600, a conversation determination unit 610, an extraction engine 620, and an extracted entity processing unit 630.

Sent/received message unit 600 may store messages sent from device 210, or received at device 210 from device 220. Unit 600 may store text messages (e.g., SMS messages), MMS messages, emails, IMs, etc. Conversation determination unit 610 may, upon the selection of a message included in a series of messages between device 210 and device 220 by user 260, analyze the series of messages to identify multiple messages that may be included as part of a conversation between device 210 and 220. The identified multiple messages may: belong to a set of the last X number of messages (where X is a positive integer) exchanged between devices 210 and 220; 2) belong to a set of messages transmitted within a specific time T between devices 210 and 220; or 3) belong to a set of messages transmitted between devices 210 and 220 and classified as belonging to a same conversation as classified by a machine learning classifier (e.g., using natural language processing) trained to classify based on provided human-classification examples.

Extraction engine 620 may extract named entities, such as, for example, names, times, dates and locations, from the messages of a conversation identified by unit 610. Extraction engine 620 may analyze sent or received messages of the identified conversation to extract the named entities associated with the occurrence of an event from the text of the messages. Extraction engine 620 may use various different algorithms for extracting named entities. In one exemplary implementation, extraction engine 620 may use a linear support vector machine trained to make a correct classification of each word in a message based on the presence or absence of one or more different features in the message. Extracted entity processing unit 630 may associate the named entities extracted by engine 620 with one another as an event that may be scheduled in a calendar application (not shown). The named entities associated as an event by unit 630 may include a name of the event, a date of the event, a time (or period of time) of the event, a location of the event, and/or other descriptive information regarding the event. Upon selection by user 260, the named entities associated with the event by unit 630 may be stored and scheduled in a calendar application.

### EXEMPLARY PROCESS

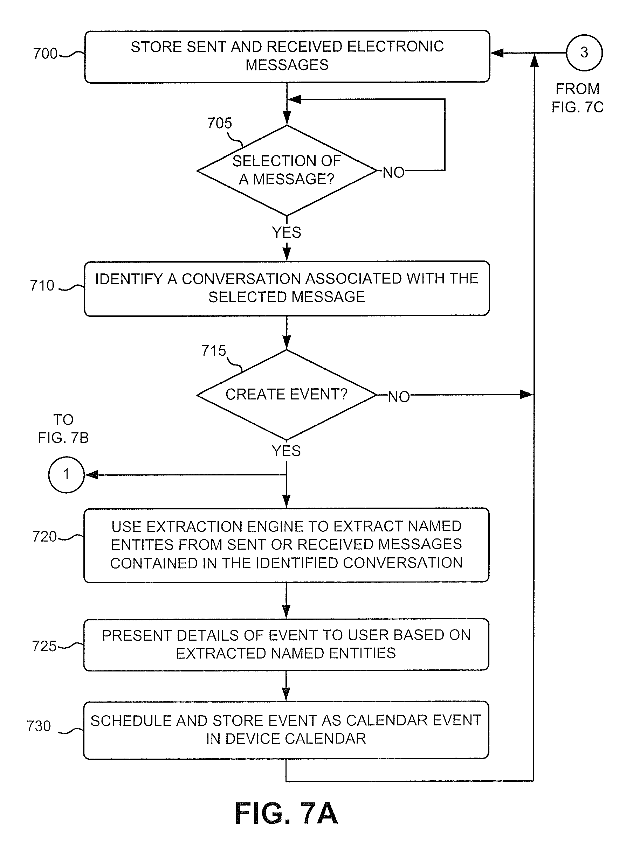

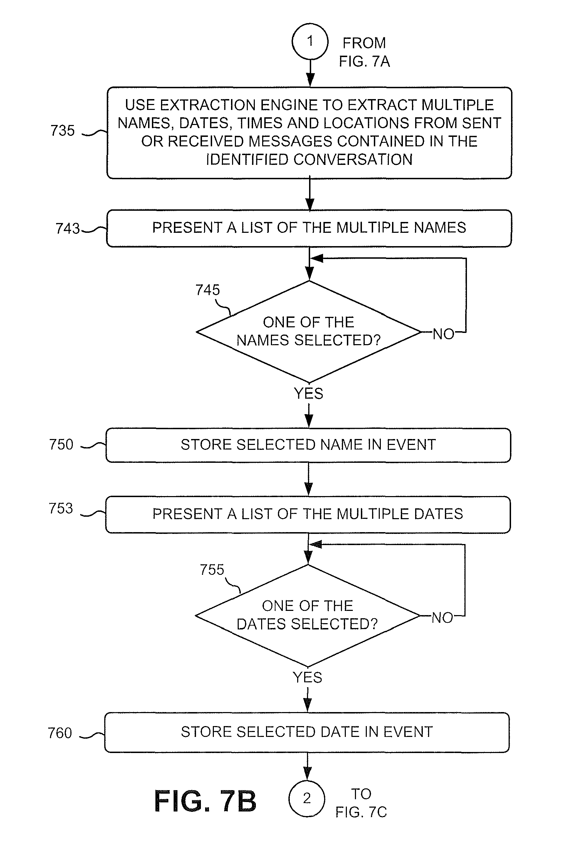

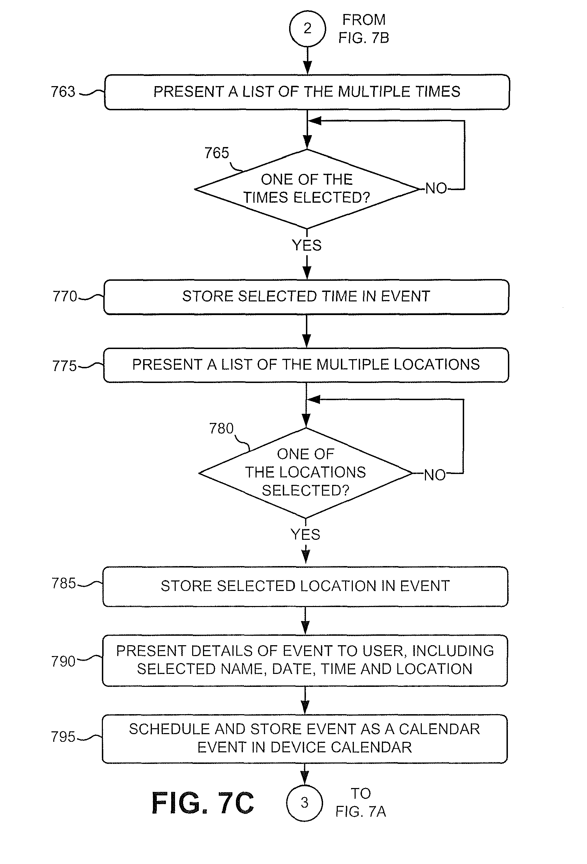

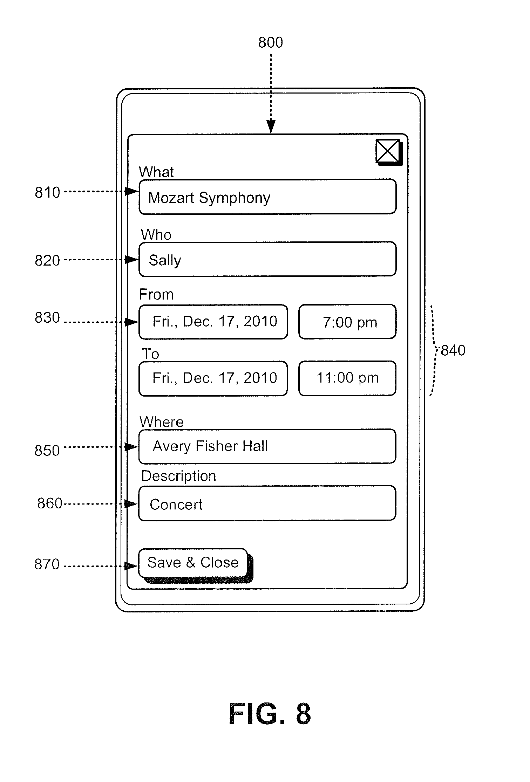

FIGS. 7A, 7B and 7C are flow diagrams illustrating an exemplary process for storing sent and received messages at a device and for extracting named entities, such as, names, dates, times and locations, from the messages for scheduling and storing calendar events at the device. The exemplary process of FIGS. 7A, 7B and 7C may be implemented by device 210. The exemplary process of FIGS. 7A - 7C is described below with reference to FIGS. 8-14.

The exemplary process may include storing sent and received electronic messages (block 700). Message unit 600 of device 210 may store sent and received electronic messages exchanged between device 210 and device 220. Message unit 600 may store the messages in, for example, memory 430. Device 210 may determine whether a message of the stored electronic messages has been selected (block 705). User 260 may select one of the messages stored by unit 600. The message may be selected from the stored messages via touch screen display 500. If a message has been selected (YES - block 705), then a conversation associated with the selected message may be identified (block 710). Conversation determination unit 610 may identify a conversation to which the selected message belongs. The conversation may be identified as belonging to a set of the last X number of messages (where X is a positive integer) exchanged between devices 210 and 220. Alternatively, the conversation may be identified as belonging to a set of messages transmitted within a specific time T between devices 210 and 220. As a further alternative, the conversation may be identified as belonging to a set of messages transmitted between devices 210 and 220 and classified as belonging to a same conversation as classified by a machine learning classifier (e.g., using natural language processing) trained to classify based on provided human-classification examples. In some implementations, unit 610 may use a combination of two or more of these identification techniques to identify a conversation.

Device 210 may determine whether an event, associated with the conversation identified in block 710, should be created (block 715). For example, referring back to FIG. 1, a "create event" option may be selected from a message option window 115. If an event creation option is not selected (NO - block 715), then the exemplary process may return to block 700.

Subsequent to block 715, two different exemplary implementations may be implemented. In a first exemplary implementation (described below with respect to blocks 720 - 730), extraction engine 620 may extract all named entities from the identified conversation to create an event that can be stored as a calendar event. In a second exemplary implementation (described below with respect to blocks 735-795), extraction engine 620 may extract multiple different named entities from the identified conversation (or from portions of the identified conversation), and the different named entities may be presented to the user for user selection, with the most recent named entity being a default choice. For example, if the named entities being extracted from the identified conversation include a name, a date, a time, and a place, then extraction engine 620 may extract multiple names, dates, times and places from the conversation and the user may be permitted to select one of the names, one of the dates, one of the times, and one of the places as an event for storing as a calendar event.

In the first exemplary implementation, if an event is to be created (YES - block 715), then extraction engine 620 may be used to extract named entities from the sent or received messages contained in the identified conversation (block 720). Extraction engine 620 may extract any type of named entity, including, for example, a name, a date, a time and a location from the identified conversation. Extraction engine 620 may use various different algorithms for extracting the named entities. In one exemplary implementation, extraction engine 620 may use a linear support vector machine trained to correctly classify each word in a message based on the presence or absence of one or more different features in the message.

Details of the event may be presented to the user based on the extracted named entities (block 725). For example, extracted entity processing unit 630 may present details of the event to user 260 via touch screen display 500. For example, as shown in FIG. 8, an event detail window 800 may be presented to user 260 via touch screen display 500. Window 800 may include a name 810 of the event, a name of the person 820 involved in the event, a date 830 of the event, a time or time period 840 of the event, a location 850 of the event, and a description 860 of the event.

The event may be scheduled and stored as a calendar event in device 210's calendar (block 730). FIG. 8 depicts a button 870 displayed on window 800 that permits user 260 to store the named entities of the event as a calendar event on date 830 at time 840. In some instances, a user may augment or change portions of the information in window 800. A calendar application may subsequently retrieve the stored calendar event when necessary to remind user 260 of the impending occurrence of the event.

Returning to block 715, in the second exemplary implementation, if an event is to be created (YES - block 715), then extraction engine 620 may be used to extract multiple different names, dates, times and locations from the sent or received messages contained in the identified conversation (block 735; FIG. 7B). Extraction engine 620 may use various different algorithms for extracting the multiple names, dates, times and locations. In one exemplary implementation, extraction engine 620 may use a linear support vector machine trained to correctly classify each word in a message based on the presence or absence of one or more different features in the message and, thereby, may extract multiple different names, dates, times and locations.

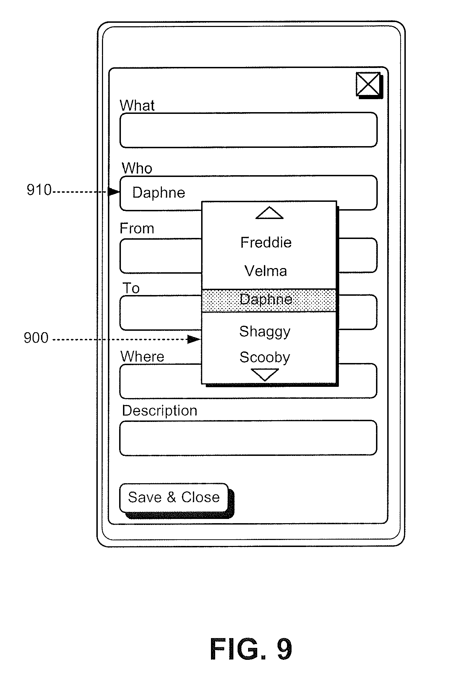

A list of the multiple names may be presented (block 743). Referring to the example of FIG. 9, a window 900 that includes a list of the multiple different names extracted by extraction engine 620 may be presented to user 260 via touch screen display 500. Device 210 may determine whether one of the multiple names has been selected (block 745). User 260 may, via a touch to an appropriate name listed in window 900, select a name for storing in association with an event. If one of the multiple names has been selected (YES - block 745), then the selected name may be stored in an event (block 750). As shown in FIG. 9, one of the multiple different names (e.g., "Daphne) may be selected from window 900 for insertion in the "Who" field 910 of the touch screen display.

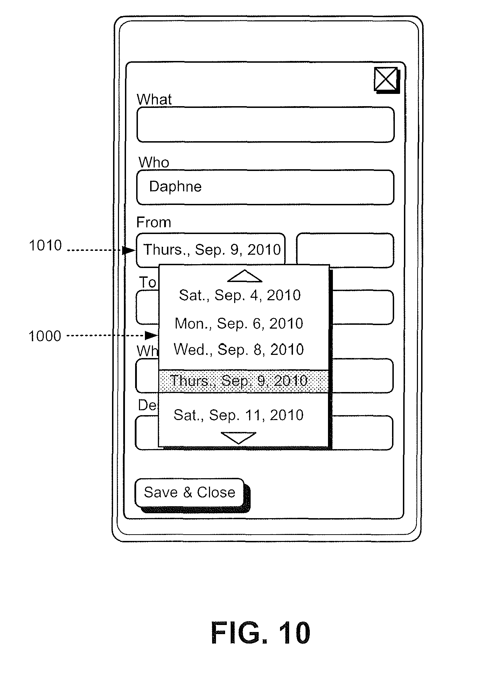

A list of the extracted multiple dates may be presented (block 753). Referring to the example of FIG. 10, a window 1000 that includes a list of the multiple different dates extracted by extraction engine 620 may be presented to user 260 via the touch screen display. Device 210 may determine whether one of the multiple dates has been selected (block 755). User 260 may, via a touch to an appropriate date listed in window 1000, select a date for storing in association with the event. If one of the multiple dates has been selected (YES - block 755), then the selected date may be stored in the event (block 760). As shown in FIG. 10, one of the multiple different dates (e.g., "Thurs., Sep. 9, 2010") may be selected from window 1000 for insertion in the "From" field 1010 of the touch screen display.

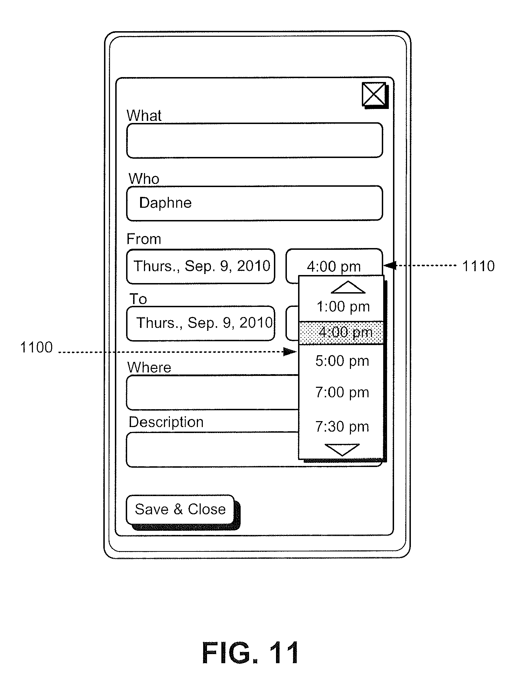

A list of the extracted multiple times may be presented (block 763). Referring to the example of FIG. 11, a window 1100 that includes a list of the multiple different times extracted by extraction engine 620 may be presented to user 260 via the touch screen display. Device 210 may determine whether one of the multiple times has been selected (block 765). User 260 may, via a touch to an appropriate time listed in window 1100, select a time for storing in association with the event. If one of the multiple times has been selected (YES - block 765), then the selected time may be stored in the event (block 770). As shown in FIG. 11, one of the multiple different times (e.g., "4:00 pm") may be selected from window 1100 for insertion in field 1110 of the touch screen display.

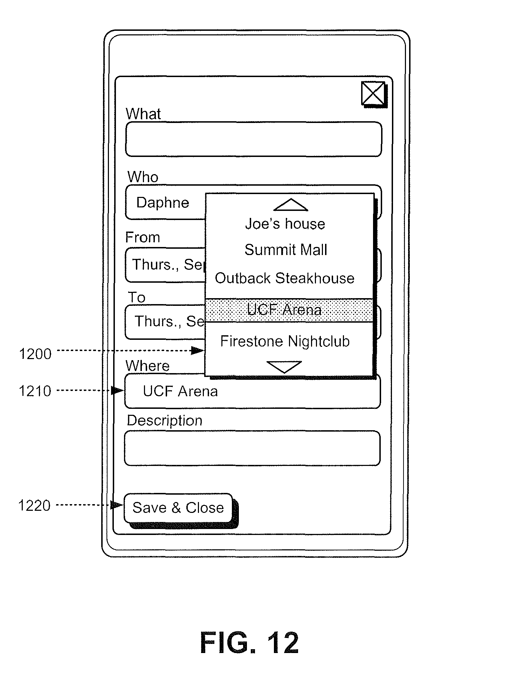

A list of the extracted multiple locations may be presented (block 775). Referring to the example of FIG. 12, a window 1200 that includes a list of the multiple different locations extracted by extraction engine 620 may be presented to user 260 via the touch screen display. Device 210 may determine whether one of the multiple locations has been selected (block 780). User 260 may, via a touch to an appropriate time listed in window 1200, select a location for storing in association with the event.

If one of the multiple locations has been selected (YES - block 780), then the selected location may be stored in the event (block 785). As shown in FIG. 12, one of the multiple different locations (e.g., "UCF Arena") may be selected from window 1200 for insertion in "Where" field 1210 of the touch screen display.

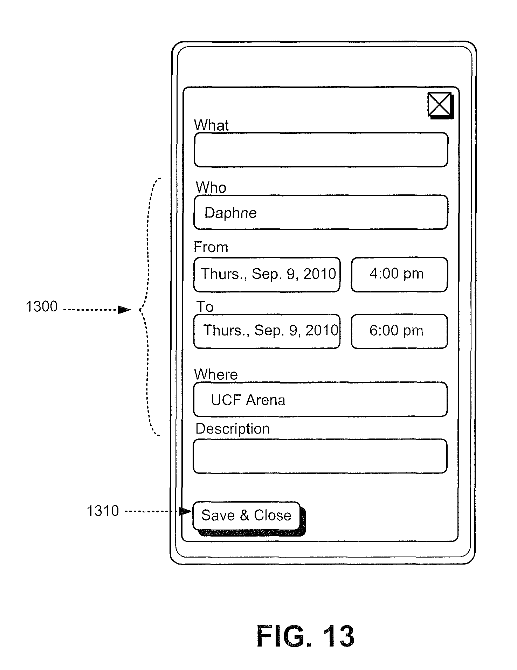

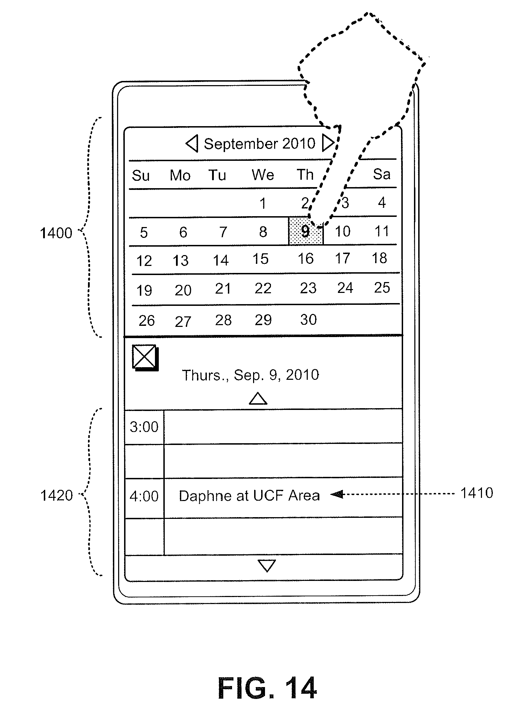

Details of the event may be presented to the user, including the selected name, date, time and location (block 790). As shown in FIG. 13, event details 1300, including the selected name, date, time and location may be presented to user 260 via the touch screen display. The event may be scheduled and stored as a calendar event in device 210's calendar application (block 795). Referring to FIG. 13, after viewing event details 1300, user 260 may cause the event to be scheduled and stored as a calendar event via a touch to "save & close" button 1310. As further shown in FIG. 14, the calendar event may be automatically stored in association with a calendar 1400 in a time entry 1410 for a day entry 1420 of a day of the appropriate calendar month.

### CONCLUSION

Implementations described herein enable the extraction of data related to the occurrence of an event from a conversation involving a series of messages, such as, for example, a series of SMS text messages, MMS messages, e-mails or IMs, between two device users, and provide for storage of the event as a calendar event in association with a calendar application. Implementations described herein, therefore, permit the automatic extraction of data associated with events from series of messages between two device users to facilitate the creation of calendar events in the devices.

The foregoing description of the embodiments described herein provides illustration and description, but is not intended to be exhaustive or to limit the invention to the precise form disclosed. Modifications and variations are possible in light of the above teachings or may be acquired from practice of the invention. For example, while series of blocks have been described with respect to FIGS. 7A, 7B and 7C, the order of the blocks may be varied in other implementations. Moreover, non-dependent blocks may be performed in parallel.

Certain features described herein may be implemented as "logic" or as a "unit" that performs one or more functions. This logic or unit may include hardware, such as one or more processors, microprocessors, application specific integrated circuits, or field programmable gate arrays, software, or a combination of hardware and software.

The term "comprises" or "comprising" as used herein, including the claims, specifies the presence of stated features, integers, steps, or components, but does not preclude the presence or addition of one or more other features, integers, steps, components, or groups thereof.

No element, act, or instruction used in the description of the present application should be construed as critical or essential to the invention unless explicitly described as such. Also, as used herein, the article "a" is intended to include one or more items. Further, the phrase "based on," as used herein is intended to mean "based, at least in part, on" unless explicitly stated otherwise.

## Claims

1. A method, comprising:
storing a conversation included in multiple electronic messages sent between a first device and a second device;
extracting, at the first device, items of data from the conversation related to a calendar event; and
scheduling the calendar event and storing the items of data in association with a calendar application at the first device.

2. The method of claim 1, wherein the electronic messages comprise Short Message Service (SMS) text messages, Multimedia Messaging Service (MMS) messages, e-mails, or Instant Messages (IMs).

3. The method of claim 1 or 2, wherein the items of data include at least one of a name, a date, a time or a place.

4. The method of any of claims 1-3, wherein the first device comprises one of a computer, a cellular telephone, a satellite navigation device, a smart phone, a personal digital assistant (PDA), a media player device, or a digital camera.

5. The method of any of claims 1-4, further comprising:
identifying the conversation from the multiple electronic messages.

6. The method of claim 5, wherein identifying the conversation from the multiple electronic messages comprises:
identifying ones of the multiple electronic messages that belong to a set of a last number of the multiple electronic messages;
identifying ones of the multiple electronic messages that belong to a set of the electronic messages transmitted within a specific period of time; or
identifying ones of the multiple electronic messages that belong to a set of the multiple electronic messages classified as belonging to a same conversation as classified by a machine learning classifier trained to classify based on human-classification examples.

7. The method of claim 6, wherein the machine learning classifier uses natural language processing.

8. A device, comprising:
a communication interface configured to receive a plurality of electronic messages;
a processing unit configured to:
identify a conversation from the plurality of electronic messages,
extract one or more items of data related to the occurrence of an event from the identified conversation, and
present the one or more items of data to a user of the device or store the one or more items of data as a calendar event in association with a calendar application.

9. The device of claim 8, wherein the one or more items of data comprise one or more names, dates, times or locations.

10. The device of claim 8 or 9, wherein the one or more items of data comprise multiple names, multiple dates, multiple times, or multiple locations.

11. The device of any of claims 8-10, wherein the processing unit is further configured to:
receive a selection of one of the multiple names, multiple dates, multiple times or multiple locations.

12. The device of any of claims 8-11, wherein the device comprises a computer, a cellular telephone, a satellite navigation device, a smart phone, a personal digital assistant (PDA), a media player device, or a digital camera and wherein the plurality of electronic messages comprise Short Message Service (SMS) text messages, Multimedia Messaging Service (MMS) messages, e-mails, or Instant Messages (IMs).

13. The device of any of claims 8-12, wherein, when identifying a conversation from the plurality of electronic messages, the processing unit is further configured to:
identify ones of the plurality of electronic messages that belong to a set of a last number of the plurality of electronic messages,
identify ones of the plurality of electronic messages that belong to a set of the electronic messages transmitted within a specific period of time, or
identify ones of the plurality of electronic messages that belong to a set of the plurality of electronic messages classified as belonging to a same conversation as classified by a machine learning classifier trained to classify based on human-classification examples.

14. A computer-readable medium containing instructions executable by at least one processing unit, the computer readable medium comprising:
one or more instructions for receiving a plurality of electronic messages, wherein the plurality of electronic messages comprise Short Message Service (SMS) text messages, Multimedia Messaging Service (MMS) messages, e-mails, or Instant Messages (IMs);
one or more instructions for identifying a conversation from the plurality of electronic messages;
one or more instructions for extracting one or more items of data related to the occurrence of an event from the identified conversation, wherein the one or more items of data comprise one or more names, dates, times or locations; and
one or more instructions for presenting the one or more items of data to a user of the device or store the one or more items of data as a calendar event in association with a calendar application.

15. The computer-readable medium of claim 14, wherein the one or more instructions for identifying the conversation from the plurality of electronic messages comprises:
one or more instructions for identifying ones of the plurality of electronic messages that belong to a set of a last number of the plurality of electronic messages,
one or more instructions for identifying ones of the plurality of electronic messages that belong to a set of the electronic messages transmitted within a specific period of time, or
one or more instructions for identifying ones of the plurality of electronic messages that belong to a set of the plurality of electronic messages classified as belonging to a same conversation as classified by a machine learning classifier trained to classify based on human-classification examples.
